# EUROPÄISCHE PATENTANMELDUNG

(11) **EP 4 431 477 A1**
(43) Veröffentlichungstag der Anmeldung: **18.09.2024**
(21) Anmeldenummer: 23161565.9
(22) Anmeldetag: 13.03.2023
(51) Int. Cl.: C03C 27/10

(54) **MONTAGESYSTEM ZUR HERSTELLUNG EINES SCHICHTENVERBUNDES UND VERFAHREN ZUR HERSTELLUNG EINES SCHICHTENVERBUNDES**

(71) Anmelder: Thomas Hofberger GmbH, 82024 Taufkirchen (DE)
(72) Erfinder: Hofberger, Thomas, 82024 Taufkirchen (DE)
(74) Vertreter: Michalski Hüttermann & Partner Patentanwälte mbB

(57) **Zusammenfassung**

Ein Montagesystem zur Herstellung eines Schichtenverbundes, umfasst: eine Schichtenanordnung umfassend eine erste Schicht (100), eine der ersten Schicht (100) gegenüberliegende zweite Schicht (200) und eine die erste Schicht (100) und die zweite Schicht (200) seitlich kontaktierende erste Dichtung (300), so dass durch die erste Schicht (100), die zweite Schicht (200) und die erste Dichtung (300) ein dazwischenliegendes und abgeschlossenes oder abschließbares, mit einem Fluid befüllbares erstes Innenvolumen (400) definiert wird. Das Montagesystem umfasst ferner mindestens ein die erste Dichtung (300) auf ihrer der Schichtenanordnung gegenüberliegenden Seite seitlich kontaktierendes Fixierungselement. Wenigstens ein Fixierungselement ist eingerichtet, um gegen die erste Dichtung (300) bewegt zu werden, so dass die erste Dichtung (300) einen Druck auf die Schichtenanordnung ausübt und/oder die erste Dichtung (300) eingerichtet ist, um durch Befüllen mit einem Fluid einen Druck auf die Schichtenanordnung auszuüben. Die erste Dichtung (300) ist an wenigstens einer Position so zugänglich, dass durch die erste Dichtung (300) hindurch eine fluidische Verbindung in das Innenvolumen (400) hinein geschaffen werden kann.

Ein Verfahren zur Herstellung eines Schichtenverbundes umfasst die Schritte I) Bereitstellen eines Montagesystems gemäß einem der Ansprüche 1 bis 9, wobei in dem Montagesystem wenigstens ein Teil der ersten Dichtung (300) gegen die hiervon kontaktierte Seite der Schichtenanordnung einen Druck ausübt; II) Sofern in dem ersten Innenvolumen (400) der Schichtenanordnung kein Klebstoff vorliegt: Einfüllen eines Klebstoffs in dieses Innenvolumen (400); III) Verpressen der Schichtenanordnung in dem Montagesystem mittels einer Pressvorrichtung und IV) Aushärten des Klebstoffes.

## Beschreibung

Die vorliegende Erfindung betrifft ein Montagesystem zur Herstellung eines Schichtenverbundes, umfassend: eine Schichtenanordnung umfassend eine erste Schicht, eine der ersten Schicht gegenüberliegende zweite Schicht und eine die erste Schicht und die zweite Schicht seitlich kontaktierende erste Dichtung, so dass durch die erste Schicht, die zweite Schicht und die erste Dichtung ein dazwischenliegendes und abgeschlossenes oder abschließbares, mit einem Fluid befüllbares erstes Innenvolumen definiert wird. In dem Montagesystem liegt weiterhin ein die erste Dichtung auf ihrer der Schichtenanordnung gegenüberliegenden Seite seitlich kontaktierendes Fixierungselement vor.

Die Erfindung betrifft weiterhin ein Verfahren zur Herstellung eines Schichtenverbundes unter Einsatz eines erfindungsgemäßen Montagesystems, wobei in dem Montagesystem wenigstens ein Teil der ersten Dichtung gegen die hiervon kontaktierte Seite der Schichtenanordnung einen Druck ausübt.

Verbundglas besteht aus mindestens zwei Glastafeln und einer Zwischenschicht, die die Glastafeln miteinander verbindet. Die Glastafeln können in beliebiger Kombination ausgewählt werden aus anorganischen Gläsern, wie Floatglas, Weissglas, Einscheibensicherheitsglas, teilvorgespanntes Glas, gefärbtes Glas, beschichtetes Glas, verspiegeltes Glas, Dünnschichtsolarmodule, und aus organischen Gläsern, wie Polycarbonat- (PC) oder Polymethylmethacrylatglas (PMMA).

Verbundglas findet beispielsweise Anwendung als Verbundglas mit Sicherheits- und/oder Schallschutzeigenschaften, beim Schutz von Oberflächen durch Verkleben mit einer Glasscheibe oder bei der Herstellung von Solarmodulen.

Zur Herstellung von Verbundglas mit einer aushärtbaren Zwischenschicht arbeitet ein weit verbreitetes Verfahren in der Weise, dass ein schräg aufgestelltes, aus zwei, in einem gewissen Abstand befindlichen, gereinigten Glastafeln bestehendes Scheibenpaket mit einem niedrigviskosen Gießharz gefüllt wird. Dabei ist der zwischen den zwei Glastafeln befindliche Hohlraum nach aussen hin mit z. B. einem doppelseitigen Klebeband, welches sich zwischen den zwei Glastafeln befindet, abgedichtet. Diese Randabdichtung kann auch mit einer Butylschnur, die einen harten Kern aus einem thermoplastischen Polymer, wie z. B. Polypropylen, enthält, bestehen.

Nach dem Befüllen, Abkippen der befüllten Doppelscheibe in die Horizontale, Entlüften und Verschließen der Einfüllöffnung mit einem thermoplastischen Material, zum Beispiel wieder mit einem Schmelzklebstoff oder mit einer Butylschnur, erfolgt die Aushärtung der zwischen den Glastafeln befindlichen Gießharzschicht. Die Aushärtung kann bei einem Einkomponentensystem durch UV- Licht oder thermisch und bei einem Mehrkomponentensystem durch Lagerung bei Raumtemperatur oder durch Wärmezufuhr erfolgen.

Der Einsatz dieser Gießharze in solchen Herstellungsverfahren hat aufgrund ihrer niedrigen Viskosität den Nachteil, bei unzureichender Benetzung der Glasoberfläche durch die beschriebene Randabdichtung (Klebeband oder Butylschnur) oder bei auch nur geringfügigen Beschädigungen derselben durch Unterwanderung der Randabdichtung noch vor der Aushärtung leicht aus der befüllten Doppelscheibe auszulaufen. Auch ist darauf zu achten, daß das Verschlußmaterial für die Gießharzeinfüllöffnung kompatibel zur Randabdichtung und zum verwendeten Gießharz ist, da bei Nichtkompatibilität wiederum die Gefahr des Auslaufens besteht und zusätzlich Verfärbungen des Gießharzes auftreten können.

WO 2000/09328 A1 beschreibt solch ein Verfahren zur Herstellung von Verbundglas, wobei ein Klebstoff mit einer Viskosität von 5 bis 300 Pa*s (23 °C) und einer Fließgrenze von 5 bis 800 Pa (23 °C) auf die Innenseite einer ersten, waagerecht liegenden Glastafel aufgebracht wird, auf diese Klebstoffschicht eine zweite Glastafel deckungsgleich unter Bildung einer Sandwichanordnung abgelegt wird, diese zusammengepresst wird und anschliessend der Klebstoff aushärtet.

In Verbundglasscheiben ist deren optische Qualität, insbesondere die Blasenfreiheit der die Glasscheiben verklebenden Zwischenlage, ein wichtiges Merkmal. Daher wurden Verfahren entwickelt, um solche Schichtenverbunde ohne Einschluss von Gasblasen im ausgehärteten Klebstoff herzustellen.

WO 2015/097111 A1 beschreibt ein Verfahren zur Herstellung eines Schichtenverbundes, wobei der Schichtenverbund ein Substrat, eine Deckschicht und eine zwischen Substrat und Deckschicht angeordnete Klebstoffschicht umfasst. Die Klebstoffschicht kontaktiert das Substrat und die Deckschicht zumindest teilweise. Das Verfahren umfasst den Schritt: Verschwenken des Substrats und der Deckschicht aufeinander zu, so dass der Abstand der oberen Substratkante zur oberen Deckschichtkante abnimmt und der Klebstoff in Richtung der oberen Substratkante und der oberen Deckschichtkante bewegt wird. Dieses wird derart durchgeführt, dass während zumindest eines Teils des Schritts B) die Winkelhalbierende (1000) des Winkels α gegenüber der Vertikalen einen Winkel von ≥ -45° bis ≤ 45° einnimmt.

Das Gebrauchsmuster DE 202013105933 U1 offenbart einen Schichtenverbund, umfassend ein Substrat, eine Deckschicht und eine zwischen Substrat und Deckschicht angeordnete ausgehärtete Klebstoffschicht, wobei die Klebstoffschicht das Substrat und die Deckschicht zumindest teilweise kontaktiert. Das Substrat umfasst einen mineralischen Werkstoff, die Deckschicht umfasst ein Glas, zwischen Substrat und Deckschicht ist eine elektrische Funktionseinheit angeordnet und in dem Schichtenverbund beträgt der durchschnittliche Gehalt an in der Klebstoffschicht eingeschlossenen Gasblasen mit einer maximalen Ausdehnung von ≥ 100 µm weniger als 100 Gasblasen/m².

Die vorliegende Erfindung hat sich die Aufgabe gestellt, die Fertigung von Verbundgläsern und anderen Schichtenverbünden derart zu verbessern, dass in einem in seiner Raum-Zeit-Ausbeute effizenten, automatisierbaren und hochskalierbaren Herstellungsverfahren eine blasenfreie oder zumindest blasenarme Verklebung der Schichten erreicht werden kann.

Erfindunsgemäß gelöst wird diese Aufgabe durch ein Montagesystem gemäß Anspruch 1 und ein Verfahren gemäß Anspruch 10.

Das erfindungsgemäße Montagesystem und Verfahren ermöglichen es, nur die Vormontage der zu verklebenden Schichten unter Reinraumbedingungen durchführen zu müssen. Sobald die Dichtung im Montagesystem das Innenvolumen und dadurch auch die zu verklebenden Schichten gegenüber der Außenumgebung isoliert, kann das Montagesystem auch außerhalb eines Reinraums verarbeitet werden. Es können eine Vielzahl von parallel vorbereitet werden und unter optimaler zeitlicher Auslastung einer Presse und einer eventuellen UV-Belichtungseinheit zur Aushärtung des Klebstoffes weiter verarbeitet werden.

Die vorliegende Erfindung wird durch die nachfolgenden Figuren näher erläutert werden, ohne jedoch darauf beschränkt zu sein. Es zeigen:
FIG. 1-7 Aspekte erfindungsgemäßer Montagesysteme
FIG. 8-9 weitere Aspekte erfindungsgemäßer Montagesysteme.

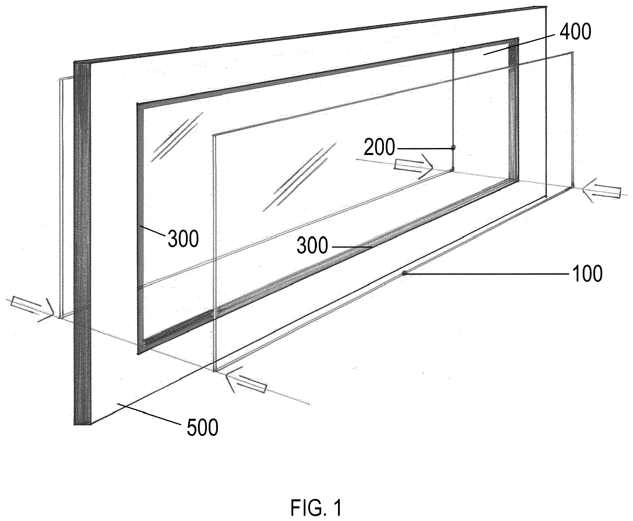

FIG. 1 zeigt eine schematische Explosionszeichnung eines erfindungsgemäßen Montagesystems zur Herstellung eines Schichtenverbundes, umfassend eine Schichtenanordnung umfassend eine erste Schicht 100, eine der ersten Schicht 100 gegenüberliegende zweite Schicht 200 und eine die erste Schicht 100 und die zweite Schicht 200 seitlich kontaktierende erste Dichtung 300, so dass durch die erste Schicht 100, die zweite Schicht 200 und die erste Dichtung 300 ein dazwischenliegendes und abgeschlossenes oder abschließbares, mit einem Fluid befüllbares erstes Innenvolumen 400 definiert wird.

In einem späteren, unter Zuhilfenahme des erfindungsgemäßen Montagesystems hergestellten Schichtenverbund, insbesondere einem Verbundglaselement, können die erste Schicht 100 und die zweite Schicht 200 mittels eines in das erste Innenvolumen eingefüllten Klebstoffs miteinander verbunden werden. Das erfindungsgemäße Montagesystem fixiert hierzu die zu verklebenden Schichten 100, 200, wobei das Innenvolumen 400 für das Einfüllen des Klebstoffs bereitgehalten wird.

Damit der Klebstoff nicht ausläuft, wird das Innenvolumen 400 auch durch die erste Dichtung 300 abgedichtet. Die erste Dichtung 300 kann einteilig oder mehrteilig ausgeführt sein, wobei die einteilige, die Schichten 100, 200 umlaufend kontaktierende Variante bevorzugt ist. Es ist weiterhin bevorzugt, dass die erste Dichtung 300 aus dem Montagesystem entnehmbar ist. Auf diese Weise können für den speziellen Einsatzzweck dimensionierte Dichtungen eingesetzt werden und verschmutzte oder verschlissene Dichtungen leicht ausgetauscht werden. Vorzugsweise enthält das Material der ersten Dichtung 300 ein Silikonpolymer. Es ist auch möglich, die Oberfläche eines nicht-Silikon-Materials mit einem Silikonpolymer zu versehen und als erste Dichtung 300 einzusetzen, solange diese Oberfläche in Richtung des Innenvolumens zeigt.

Die Dichtungen können auf sehr einfache Weise hergestellt werden. Die Form der Dichtung ist dabei für jeden Einsatz, der abgedichtet werden muss, in einer vorgefrästen 2D-Dichtform (CNC-gefräste Holzplatte) möglich. Dabei kann die Kante zum Rahmen 500 gerade verlaufen. Die Kante zur Schichtenanordnung kann sowohl gerade, konkav, konvex, spitzwinklig, zackig, abgestuft oder eben in der zu produzierenden Form erfolgen.

Die Dichtung kann, damit diese beim Aufziehen des Rahmens 500 (erste Dichtung 300 eingefahren) am Rahmen 500 fixiert bleibt, eine entsprechende Wulst (ein Profil) aufweisen, die mechanisch gespannt/aufgezogen werden kann. Dann kann die erste Dichtung 300 über diese Wulst gesichert sein, um beim Aufziehen nicht heraus zu rutschen.

Ebenso können die zu verklebenden Schichten 100, 200, unterschiedliche Größen oder Formen aufweisen, so dass mittels der Verklebung ein Absatz, ein Falz oder sogar eine Nut erzeugt werden kann.

Der Rahmen 500 kann auch so ausgeführt werden, dass dieser in der zu produzierenden und gewünschten Material-Paket-Dicke skalierbar ist.

Der Rahmen 500 kann einteilig oder mehrteilig ausgeführt sein. Beispielsweise kann er in einer Variante zwei Einheiten aufweisen: einer vorderen und einer hinteren Rahmeneinheit mit beidseitigem Vakuum, speziell ein feines flächiges Vakuum zur Innenseite, um beispielsweise eine Polymerfolie vorgespannt zwischen der ersten Schicht 100 und der zweiten Schicht 200 und über die Abmessung der Schichtenanordnung hinaus in Form halten zu können, bis die Aushärtung des Klebstoffs abgeschlossen ist.

Der Rahmen 500 kann eingesetzt werden, um als Templat die Form des Schichtenverbundes vorzugeben oder dessen Formgebung zu unterstützen. Unter Berücksichtigung dessen kann der Rahmen 500 plan über seine gesamte Fläche, aber auch auch eine plane, auf Gefälle gearbeitete Form aufweisen.

Da der Rahmen 500 in seiner Formgestaltung grundsätzlich nicht eingeschränkt ist, kann er auch abgewinkelt, gebogen, gewölbt, egal ob konkav oder konvex, in seiner eigenen Form ausgeführt sein.

Der Rahmen 500 kann in jeder denkbaren Größe einschließlich zur Verarbeitung von XXL-Glasflächen (20 x 3,3 Meter) und für Kleinformate (Visitenkarte) ausgeführt sein.

Der Rahmen 500 kann aus Metall oder Kunststoff gefertigt werden.

Der Rahmen 500 kann in seiner Größe verstellbar oder starr gefertigt werden.

Der Rahmen 500 ist vorzugsweise mehrfach verwendbar.

Selbstverständlich können in dem erfindungsgemäßen Montagesystem auch noch mehr Schichten, beispielsweise eine dritte Schicht und auch noch mehr Dichtungen, beispielsweise eine zweite Dichtung vorliegen.

Vorzugsweise weist das Material der ersten Dichtung 300 eine maximale Dehnung, bestimmt im Zugversuch gemäß ISO 527-1/-2, von ≥ 50% und mehr bevorzugt von ≥ 100% auf. Es ist weiterhin bevorzugt, dass das Material der ersten Dichtung 300 ein Rückstellvermögen bei 50% Dehnung, bestimmt im Zugversuch gemäß ASTM D412, von ≥ 90% aufweist.

Das Montagesystem weist weiterhin mindestens ein die erste Dichtung 300 auf ihrer der Schichtenanordnung gegenüberliegenden Seite seitlich kontaktierendes Fixierungselement auf. Dieses ist in FIG. 1 nicht näher dargestellt, kann aber beispielsweise innerhalb des Rahmens 500 integriert sein. Vorzugsweise liegen so viele Fixierungselemente vor, wie notwendig sind, um die erste Dichtung 300 umlaufend abzustützen. Ein Teil der Fixierungselemente kann auch durch den Rahmen 500 selbst gebildet werden.

In dem Montagesystem ist wenigstens ein Fixierungselement eingerichtet ist, um gegen die erste Dichtung 300 bewegt zu werden, so dass die erste Dichtung 300 einen Druck auf die Schichtenanordnung ausübt. Alternativ oder zusätzlich ist die erste Dichtung 300 eingerichtet, um durch Befüllen mit einem Fluid (zum Beispiel Aufblasen mittels Druckluft) einen Druck auf die Schichtenanordnung auszuüben. Auch dieses ist in FIG. 1 nicht näher dargestellt. Dieses bewegliche Fixierungselement kann im eingefahrenen Zustand das Einlegen der Schichten 100, 200 (zum Beispiel Glasscheiben) in das Montagesystem ermöglichen und im ausgefahrenen Zustand die erste Dichtung 300 gegen die Schichten 100, 200 pressen. Das Gleiche gilt sinngemäß für eine zum Beispiel auflblasbare erste Dichtung 300. Im erfindungsgemäßen Montagesystem kann auch eine Mehrzahl von Fixierungselementen eingerichtet sein, um gegen die hiervon kontaktierte Seite der ersten Dichtung 300 bewegt zu werden. Vorzugsweise ist mindestens die Hälfte der Fixierungselemente so beweglich eingerichtet und besonders bevorzugt sind alle Fixierungselemente so beweglich eingerichtet.

Durch die Fixierung der Schichtenanordnung im Montagesystem können die Schichten 100, 200 in eine für ihr Verpressen mit Klebstoff günstige räumliche Position, beispielsweise senkrecht stehend, gebracht werden.

Die erste Dichtung ist an wenigstens einer Position so zugänglich, dass durch die erste Dichtung hindurch eine fluidische Verbindung in das Innenvolumen hinein geschaffen werden kann. Auch dieses ist in FIG. 1 nicht näher dargestellt. Der Zugang kann durch eine Aussparung im Rahmen 500 realisiert werden. Die fluidische Verbindung kann beispielsweise durch eine Aussparung im Rahmen 500 in Verbindung mit einem Durchstechen der ersten Dichtung 300 oder aber mit einem durch die erste Dichtung 300 und eine Aussparung im Rahmen 500 führende Schlauchleitung erreicht werden.

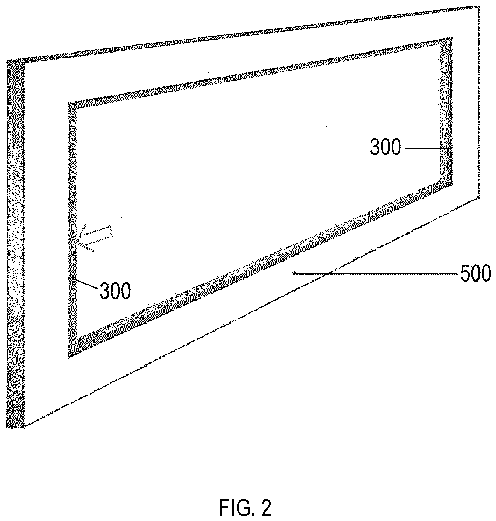

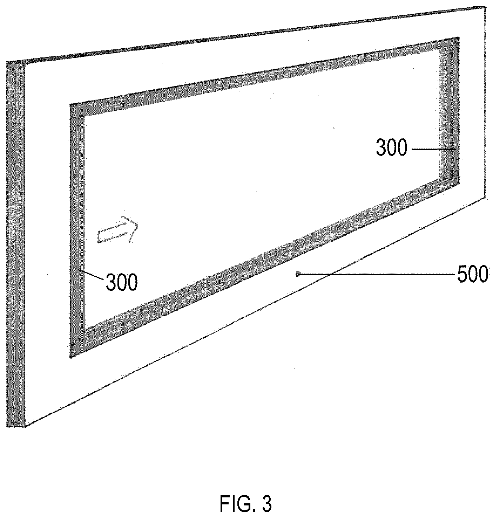

Die Beweglichkeit der ersten Dichtung 300 zum Einlegen und zur Fixierung von im im Montagesystem vorgesehenen Schichtenanordnungen wird in FIG. 2 und FIG. 3 schematisch dargestellt. In FIG. 2 ist die erste Dichtung 300 in einem eingefahrenen Zustand, wodurch genug Platz für das Einlegen der Schichtenanordnung in den Rahmen 500 bereitgestellt wird. In FIG. 3 ist die erste Dichtung 300 nun im ausgefahrenen Zustand, wodurch eine Schichtenanordnung im Rahmen 500 durch den durch die erste Dichtung auf die Schichtenanordnung ausgeübten Druck fixiert werden kann.

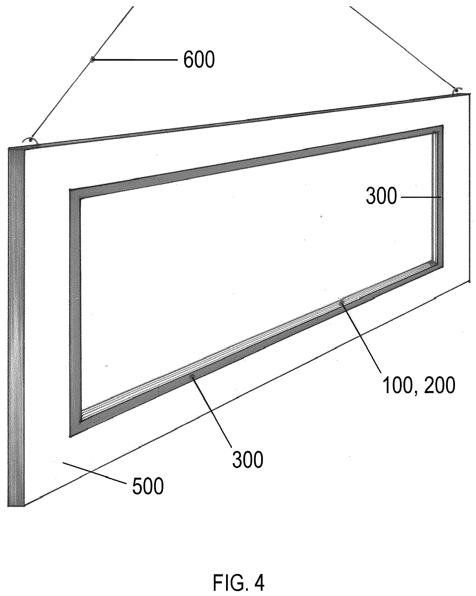

FIG. 4 zeigt eine Transportanordnung, in der in einem erfindungsgemäßen Montagesystem die erste Schicht 100 und zweite Schicht 200 durch die ausgefahrene erste Dichtung 300 im Rahmen 500 fixiert sind. Auf der Oberseite des Rahmens 500 sind Kettenzüge 600 angebracht, die ein Transport des Montagesystems mittels Deckenkränen oder dergleichen ermöglichen.

In einer Ausführungsform des Montagesystems sind die erste Schicht 100 und die zweite Schicht 200 nicht parallel zueinander angeordnet. Dieses ist im Gegensatz zu der in FIG. 1 gezeigten Anordnung, in der die Schichten 100, 200 im Wesentlichen parallel zueinander angeordnet sind. Durch die nicht-parallele Anordnung kann erreicht werden, dass beim Verpressen der Schichten 100, 200 der dazwischen befindliche Klebstoff in eine bestimmte Richtung gedrückt wird, wodurch eventuell im Klebstoff eingeschlossene Gasblasen ebenfalls kontolliert in eine Richtung gelenkt werden. Dieses lässt sich bei geeigneter Wahl der Richtung, insbesondere nach oben (entgegen der Schwerkraftrichtung), für eine blasenfreie Verklebung der Schichten 100, 200 ausnutzen. Die erste Schicht 100 und die zweite Schicht 200 können beispielsweise so angeordnet sein, dass sie im Querschnitt ein "V" mit nach oben weisender Öffnung darstellen.

Das Material der Schichten 100 und 200 kann gleich oder unterschiedlich sein. Beispiele für geeignete Materialien sind mineralische Werkstoffe oder Glas. Geeignete mineralische Werkstoffe sind beispielsweise Stein, Naturstein, Beton, Gips und dergleichen. Unter "Naturstein" versteht man ganz allgemein alle Gesteine, wie man sie in der Natur vorfindet. Bevorzugte Natursteine sind Granit, Marmor, Quarz, Quarzkomposit, Travertin, Sandstein, Schiefer und Achat. Vorzugsweise beträgt die Dicke der Schichten 100 und/oder 200 unabhängig voneinander ≥ 1 mm bis ≤ 40 mm und mehr bevorzugt ≥ 2 mm bis ≤ 20 mm.

In einer weiteren Ausführungsform des Montagesystems sind die erste und/oder die zweite Schicht 100, 200 Glasschichten. Das Glas kann gefärbt oder ungefärbt sein. Beispiele für geeignete Gläser sind E-Glas, S-Glas, M-Glas, Quarzglas, Borosilikatglas, Kronglas, Kalk-Natron-Glas, Floatglas, Flintglas und/oder Bleikristallglas.

In einer weiteren Ausführungsform des Montagesystems ist die erste Dichtung 300 wenigstens teilweise transparent. Insbesondere kann sie transparent für Licht sein, das zur Aushärtung eines UV-härtendenden Klebstoffs verwendet wird. Ein Beispiel für eine geeignete Wellenlänge ist 254 nm. Durch das Einstrahlen von (UV-)Licht auch durch die seitliche Dichtung lässt sich eine schnellere und gleichmäßigere Aushärtung von zwischen den Schichten 100, 200 befindlichem strahlenhärtenden Klebstoff erreichen.

In einer weiteren Ausführungsform des Montagesystems enthält das Material der ersten Dichtung 300 ein Silikonpolymer mit einer Oberflächenspannung von ≥ 20 mN/m bis ≤ 30 mN/m. Die Oberflächenspannung kann gemäß DIN ISO 8296 bestimmt werden, insbesondere mittels Testtinten unter Berücksichtigung dieser Norm. Vorzugsweise beträgt die Oberflächenspannung ≥ 22 mN/m bis ≤ 26 mN/m. Solche Oberflächenspannungen verhindern eine Wechselwirkung der Dichtung mit dem Klebstoff, insbesondere einem UV-härtenden Klebstoff, welcher zusätzlich optionale Reaktivverdünner enthalten kann. Unerwünschte Wechselwirkungen können Undichtigkeiten der ersten Dichtung 300 zur Folge haben. Ein weiterer, produktionstechnischer Vorteil der verhinderten Wechselwirkungen zwischen Klebstoff und ersten Dichtung 300 ist, dass dann die Dichtung kein Einwegartikel ist, sondern mehrfach verwendet werden kann.

In einer weiteren Ausführungsform des Montagesystems liegt in dem ersten Innenvolumen 400 ein Klebstoff vor. Der Klebstoff ist vorzugsweise transparent und insbesondere ein Zweikomponenten-Klebstoff wie Epoxy-, (Meth)Acrylat- und Polyurethanharze oder ein strahlenhärtender Klebstoffe wie (Meth)Acrylate und Urethan(meth)acrylate. Geeignet sind auch Dual Cure-Klebstoffe, in denen eine Strahlenhärtung und eine Härtung ohne Bestrahlung nebeneinander oder hintereinander ablaufen. Der Klebstoff kann als Bestandteil seiner Formulierung auch Reaktivverdünner wie monomere (Meth)Acrylate enthalten. Das mit dem Klebstoff befüllte Montagesystem stellt einen weiteren Schritt in der Prozesskette zur Herstellung eines Schichtenverbundes dar, wie weiter unten noch erläutert werden wird.

In einer weiteren Ausführungsform des Montagesystems liegt zwischen der ersten und der zweiten Schicht 100, 200 weiterhin eine Zwischenschicht vor. Beispiele für geeignete Zwischenschichten sind Zwischenschichten umfassend Holz, Naturstein und/oder Polymere. Die Zwischenschicht kann auch einen elektrische Funktionseinheit sein, insbesondere eine Anzeigevorrichtung, eine Photovoltaik-Vorrichtung oder elektrisch gesteuerte Abdunkelungsvorrichtung.

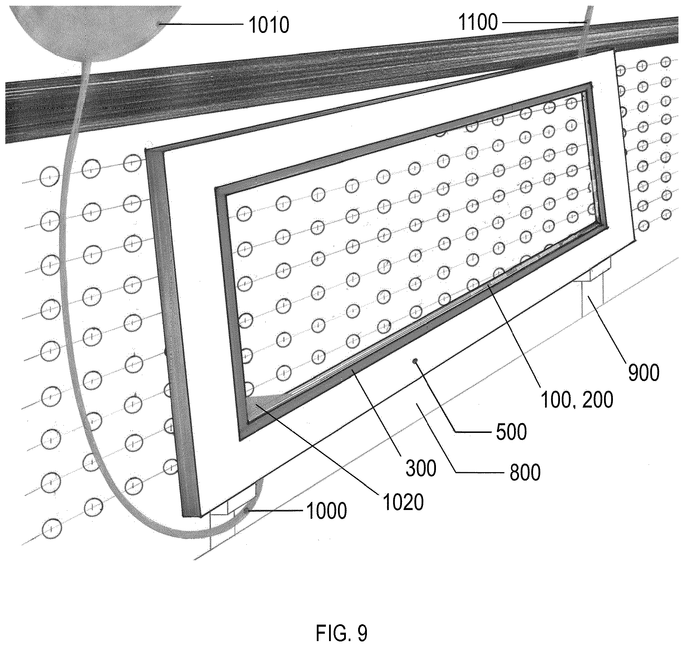

In einer weiteren Ausführungsform des Montagesystems und unter weiterer Bezugnahme auf FIG. 9 ist das erste Innenvolumen 400 durch eine oder mehrere durch die erste Dichtung 300 hindurchführende Schlauchleitung oder Schlauchleitungen 1000, 1100 fluidisch zugänglich. So kann das Innenvolumen 400 mit einem Klebstoff befüllt werden. Es ist bevorzugt, mindestens zwei Schlauchleitungen zu verwenden. Dann kann durch eine Schlauchleitung der Klebstoff eingefüllt werden und aus der anderen Schlauchleitung kann die beim Einfüllen verdrängte Luft entweichen. In Erweiterung dieses Konzepts kann auch mittels der anderen Schlauchleitung ein Unterdruck an das Innenvolumen 400 angelegt werden.

In einer weiteren Ausführungsform des Montagesystems ist wenigstens ein Fixierungselement eingerichtet, um gegen die hiervon kontaktierte Seite der Schichtenanordnung hydraulisch, pneumatisch und/oder elektrisch bewegt zu werden. Bevorzugt sind pneumatische Aktoren, da nach Verschließen von Ventilen der aufgebaute Druck aufrecht gehalten werden kann, ohne dass das Montagesystem mit einer Hydraulikleitung oder elektrischen Stromleitung verbunden sein muss.

Beispielsweise kann der Rahmen 500 zum Anpressen mit Luft entsprechende, der zu fertigenden Form angepasste Druckelemente aufweisen, in der Größe, die die Dichtung aus der Rahmenkonstruktion in die Rahmenmitte pressen. Der Druck ist einstellbar. Der Rahmen 500 kann beidseitig mit einem Flächenvakuum ausgestattet werden. Der Montagerahmen kann ein akustisches Meldesystem aufweisen, das bei Druckverlust dieses dem Benutzer meldet.

Das erfindungsgemäße Verfahren zur Herstellung eines Schichtenverbundes umfasst die Schritte:
I) Bereitstellen eines erfindungsgemäßen Montagesystems wobei in dem Montagesystem wenigstens ein Teil der ersten Dichtung 300 gegen die hiervon kontaktierte Seite der Schichtenanordnung einen Druck ausübt;
II) Sofern in dem ersten Innenvolumen 400 der Schichtenanordnung kein Klebstoff vorliegt: Einfüllen eines Klebstoffs in dieses Innenvolumen 400;
III) Verpressen der Schichtenanordnung in dem Montagesystem mittels einer Pressvorrichtung;
IV) Aushärten des Klebstoffes.

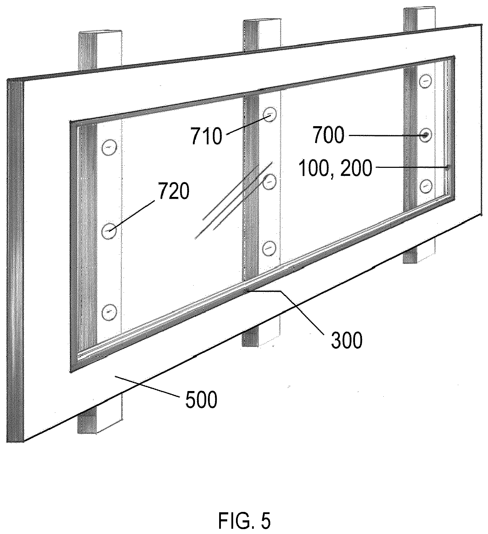

Eine Möglichkeit, das erfindungsgemäße Montagesystem gemäß Schritt I) bereitzustellen, beginnt mit der in FIG. 5 gezeigten Anordnung. Das Montagesystem mit Rahmen 500 und eingefahrener erster Dichtung 300 beherbergt die darin eingelegte erste Schicht 100 und zweite Schicht 200. Der Rahmen 500 wird durch Vakkum-Fixierungselemente 700, 710, 720 festgehalten. Die den Vakuum-Fixierungselementen 700, 710, 720 zugewandte Schicht aus erster Schicht 100 und zweiter Schicht 200 wird ebenfalls von diesen Vakuum-Fixierungselementen festgehalten, so dass Rahmen 500 und die betreffende Schicht bündig zueinander abschließen. Ausgehend von der in FIG. 5 gezeigten Anordnung kann wenigstens die erste Dichtung 300 ausgefahren werden, um Druck auf die Schichtenanordung aus erster Schicht 100 und zweiter Schicht 200 auszuüben.

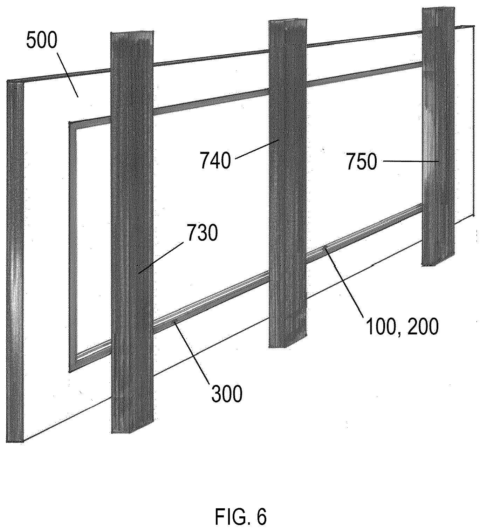

Selbstverständlich kann auch von der anderen Seite der Schichtenanordnung her vorgegangen werden. Dieses ist in FIG. 6 dargestellt, wo Vakuum-Fixierungselemente 730, 740, 750 zum Einsatz kommen.

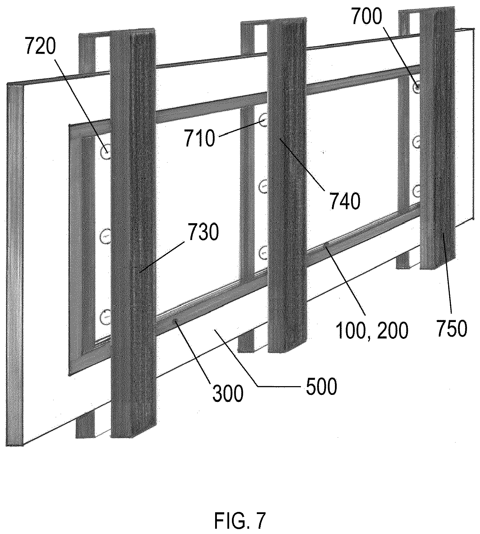

Eine weitere Möglichkeit, das erfindungsgemäße Montagesystem gemäß Schritt I) bereitzustellen, ist in FIG. 7 abgebildet. Der Rahmen 500 mit erster Dichtung 300 und darin eingelegter Schichtenanordnung aus erster Schicht 100 und zweiter Schicht 200 wird beidseitig von Vakuum-Fixierungselementen 700-750 fixiert. Die erste Schicht 100 und die zweite Schicht 200 werden ebenfalls von den sie kontaktierenden Vakkum-Fixierungselementen festgehalten und schließen so bündig mit dem Rahmen 500 ab. Durch die Dimensionierung des Rahmens 500 kann das im Zusammenhang mit FIG. 1 gezeigte Innenvolumen 400 aufgebaut werden. Nach Ausfahren der ersten Dichtung 300 ist die Anordnung fixiert und kann transportiert werden.

Gemäß Schritt II) des Verfahrens wird sichergestellt, dass im Innenvolumen zwischen der ersten Schicht 100 und der zweiten Schicht 200 ein Klebstoff vorliegt. Details zum Klebstoff wurden bereits zuvor ausgeführt und sollen zur Vermeidung von Wiederholungen nicht erneut vorgestellt werden.

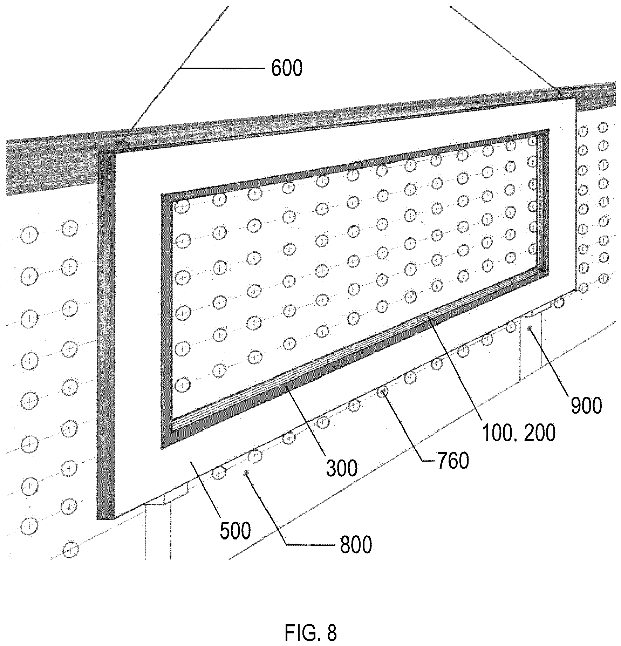

Der Klebstoff kann beispielsweise eingefüllt werden, wenn das Montagesystem gemäß FIG. 7 fixiert ist. Es ist aber auch möglich und in FIG. 8 dargestellt, eine Flächen-Vakuum-Fixierungseinheit 800 einzusetzen. Zur Vorbereitung des Einfüllens wird das Montagesystem mit ausgefahrener ersten Dichtung 300 über Kettenzüge 600 zur Fixierungseinheit 800 transportiert und dort auch gesichert. Die Höhenversteller 900 erlauben es, das Montagesystem mit Rahmen 500, ausgefahrener erster Dichtung 300 und darin befindlicher Schichtenanordnung mit erster Schicht 100 und zweiter Schicht 200 auch nicht-horizontal zu platzieren.

Das Einfüllen des Klebstoffs ist in FIG. 9 gezeigt. Das in der Fixierungseinheit 800 festgehaltene Montagesystem mit Rahmen 500, ausgefahrener erster Dichtung 300 und darin befindlicher Schichtenanordnung mit erster Schicht 100 und zweiter Schicht 200 ist durch horizontal versetzte Höhenversteller 900, 1000 schräg angeordnet. Dadurch kann über die Schlauchleitung 1000, welche durch die erste Dichtung 300 hindurchführt, aus Vorratsbehälter 1010 der Klebstoff 1020 am tiefsten Punkt des Innenvolumens eingefüllt werden. Die Schlauchleitung 1100 führt am höchsten Punkt des Innenvolumens durch die erste Dichtung 300 hindurch und kann durch den Klebstoff 1020 verdrängtes Gas entweichen lassen.

Die Positionierung des Klebstoff-Vorratsbehälters 1010 in vertikaler Hinsicht über den höchsten Punkt des Innenvolumens hat den Vorteil, dass der Klebstoff einfach mittels Schwerkraft eingefüllt werden kann und dass eventuell im Klebstoff vorliegende Gasblasen nach oben aus dem Vorratsbehälter 1010 entweichen können, während der Klebstoff an sich unten aus dem Vorratsbehälter 1010 auslaufen kann.

Vor dem Einfüllen des Klebstoffes kann das Innenvolumen mit einem Inertgas gespült werden. Es ist ebenfalls möglich, eine Dichtheitsprüfung vorzunehmen. Dazu kann ein Überdruck an das Innenvolumen angelegt werden, die Verbindung zur Überdruckquelle getrennt werden und das Vorliegen eines Druckabfalls im Innenvolumen überwacht werden. Undichte Montageanordnungen, beispielsweise wegen verschlissenener Dichtungen, können dann vor dem Befüllen mit Klebstoff identifiziert und ausgesondert werden.

Gemäß Schritt III) des Verfahrens erfolgt ein Verpressen der Schichtenanordnung in dem Montagesystem mittels einer Pressvorrichtung. Ein Teil der Pressvorrichtung kann durch die in FIG. 8 und FIG. 9 gezeigte Flächen-Vakuum-Fixierungseinheit 800 gebildet werden. Ein anderer Teil der Pressvorrichtung kann dann gezielt auf die Schichtenanordnung mit erster Schicht 100 und zweiter Schicht 200 einwirken.

Während des Verfahrens kann der Druck, den die erste Dichtung 300 gegen die Schichtenanordnung ausübt, wechseln. So kann ein vergleichsweise hoher Druck zur Fixierung einer Transportkonfiguration des Montagesystems dienen und ein vergleichsweise niedriger Druck die Beweglichkeit der ersten Schicht 100 und/oder der zweiten Schicht 200 beim Verpressen fördern.

Es ist weiterhin möglich, dass während des Verpressens in Schritt III) die erste Schicht 100 und/oder die zweite Schicht 200 über die Oberfläche der ersten Dichtung 300 bewegt werden.

Das Aushärten des eingefüllten Klebstoffes in Schritt IV) richtet sich nach der Art des Klebstoffes, insbesondere kommen aber photochemische und thermische Aushärtungen in Frage. Das Aushärten kann erfolgen, während die Montageanordnung noch in einer Pressanordnung verpresst wird oder dort noch aufbewahrt wird.

Nach dem Aushärten des Klebstoffes kann die so verklebte Schichtenanordnung entnommen werden und der Rest des Montagesystems wieder in den Produktionsprozess zurückgeführt werden.

In einer Ausführungsform des Verfahrens wird vor, während und/oder nach dem Einfüllen des Klebstoffes dieser mit einem Unterdruck beaufschlagt. So kann, wie in FIG. 9 gezeigt, über die Schlauchleitung 1100 dieser Unterdruck angelegt werden. Neben einer Beschleunigung des Einfüllens gerade bei höherviskosen Klebstoffen kann eine weitere Entgasung des Klebstoffes erfolgen.

In einer weiteren Ausführungsform des Verfahrens wird nach dem Verpressen in Schritt III) das Montagesystem aus der Pressvorrichtung entnommen, bevor in Schritt IV) der Klebstoff aushärtet. Zur Verbesserung der Raum-Zeit-Ausbeute ist bevorzugt, die verpresste Montageanordnung zu entnehmen und die Aushärtung räumlich getrennt von der Pressanordnung vorzunehmen.

In einer weiteren Ausführungsform des Verfahrens erfolgt Schritt III) derart, dass nach dem Verpressen der Schichtenanordnung in dem Montagesystem wenigstens die erste und die zweite Schicht parallel zueinander angeordnet sind. Dieses stellt den gewünschten Endzustand bei vielen Schichtenverbunden, insbesondere Verbundgläsern, dar.

In einer weiteren Ausführungsform des Verfahrens ist der Klebstoff ein strahlenhärtender Klebstoff und das Aushärten in Schritt IV) erfolgt durch Bestrahlen des Klebstoffes. Zu Details des Klebstoffes wird auf die vorstehenden Ausführungen verwiesen.

In einer weiteren Ausführungsform des Verfahrens wird in Schritt III) die Schichtenanordnung aufrecht stehend verpresst. Die Winkelhalbierende des zwischen der ersten Schicht 100 und der zweiten Schicht 200 gebildenten Winkels kann dabei einen Winkel von +45° bis -45° zur Senkrechten einnehmen. Durch das aufrecht stehende Verpressen können eventuell im Klebstoff eingeschlossene Gasblasen nach oben aus dem Innenvolumen herausgeführt werden.

In einer weiteren Ausführungsform des Verfahrens wird in Schritt I) ein Montagesystem bereitgestellt, bei dem die erste Schicht 100 und die zweite Schicht 100 nicht parallel zueinander angeordnet sind, wobei diejeinige Seite der Schichtenanordnung mit dem größten Abstand der ersten Schicht 100 und der zweiten Schicht 200 zueinander nach oben zeigt. Durch die nicht-parallele Anordnung kann erreicht werden, dass beim Verpressen der Schichten 100, 200 der dazwischen befindliche Klebstoff in eine bestimmte Richtung gedrückt wird, wodurch eventuell im Klebstoff eingeschlossene Gasblasen ebenfalls kontolliert in eine Richtung gelenkt werden. Dieses lässt sich bei geeigneter Wahl der Richtung, insbesondere nach oben (entgegen der Schwerkraftrichtung), für eine blasenfreie Verklebung der Schichten 100, 200 ausnutzen. Die erste Schicht 100 und die zweite Schicht 200 können beispielsweise so angeordnet sein, dass sie im Querschnitt ein "V" mit nach oben weisender Öffnung darstellen.

In einer weiteren Ausführungsform des Verfahrens erfolgt in Schritt III) das Verpressen bei einem Druck von ≥ 1 bar bis ≤ 10 bar, vorzugsweise bei einem Druck von ≥ 2 bar bis ≤ 8 bar.

In einer weiteren Ausführungsform des Verfahrens übt wenigstens in Schritt III) wenigstens ein Fixierungselement auf die hiervon kontaktierte Seite der Schichtenanordnung einen Druck von ≥ 1 bar bis ≤ 10 bar aus. Vorzugsweise beträgt dieser Druck ≥ 2 bar bis ≤ 8 bar. Das Gleiche gilt für den Innendruck einer eventuell oder alternativ vorliegenden expandierenden ersten Dichtung 300.

## Patentansprüche

1. Montagesystem zur Herstellung eines Schichtenverbundes, umfassend:
eine Schichtenanordnung umfassend eine erste Schicht (100), eine der ersten Schicht (100) gegenüberliegende zweite Schicht (200) und eine die erste Schicht (100) und die zweite Schicht (200) seitlich kontaktierende erste Dichtung (300), so dass durch die erste Schicht (100), die zweite Schicht (200) und die erste Dichtung (300) ein dazwischenliegendes und abgeschlossenes oder abschließbares, mit einem Fluid befüllbares erstes Innenvolumen (400) definiert wird
und
mindestens ein die erste Dichtung (300) auf ihrer der Schichtenanordnung gegenüberliegenden Seite seitlich kontaktierendes Fixierungselement;
**dadurch gekennzeichnet, dass**
wenigstens ein Fixierungselement eingerichtet ist, um gegen die erste Dichtung (300) bewegt zu werden, so dass die erste Dichtung (300) einen Druck auf die Schichtenanordnung ausübt und/oder die erste Dichtung (300) eingerichtet ist, um durch Befüllen mit einem Fluid einen Druck auf die Schichtenanordnung auszuüben
und
die erste Dichtung (300) an wenigstens einer Position so zugänglich ist, dass durch die erste Dichtung (300) hindurch eine fluidische Verbindung in das Innenvolumen (400) hinein geschaffen werden kann.

2. Montagesystem gemäß Anspruch 1, wobei die erste Schicht (100) und die zweite Schicht (200) nicht parallel zueinander angeordnet sind.

3. Montagesystem gemäß einem der vorhergehenden Ansprüche, wobei die erste und/oder die zweite Schicht (100, 200) Glasschichten sind.

4. Montagesystem gemäß einem der vorhergehenden Ansprüche, wobei die erste Dichtung (300) wenigstens teilweise transparent ist.

5. Montagesystem gemäß einem der vorhergehenden Ansprüche, wobei das Material der ersten Dichtung (300) ein Silikonpolymer mit einer Oberflächenspannung von ≥ 20 mN/m bis ≤ 30 mN/m enthält.

6. Montagesystem gemäß einem der vorhergehenden Ansprüche, wobei in dem ersten Innenvolumen (400) ein Klebstoff vorliegt.

7. Montagesystem gemäß einem der vorhergehenden Ansprüche, wobei zwischen der ersten und der zweiten Schicht (100, 200) weiterhin eine Zwischenschicht vorliegt.

8. Montagesystem gemäß einem der vorhergehenden Ansprüche, wobei das erste Innenvolumen (400) durch eine oder mehrere durch die erste Dichtung (300) hindurchführende Schlauchleitung oder Schlauchleitungen (1000, 1100) fluidisch zugänglich ist.

9. Montagesystem gemäß einem der vorhergehenden Ansprüche, wobei wenigstens ein Fixierungselement eingerichtet ist, um gegen die hiervon kontaktierte Seite der Schichtenanordnung hydraulisch, pneumatisch und/oder elektrisch bewegt zu werden.

10. Verfahren zur Herstellung eines Schichtenverbundes, umfassend die Schritte:
I) Bereitstellen eines Montagesystems gemäß einem der Ansprüche 1 bis 9, wobei in dem Montagesystem wenigstens ein Teil der ersten Dichtung (300) gegen die hiervon kontaktierte Seite der Schichtenanordnung einen Druck ausübt;
II) Sofern in dem ersten Innenvolumen (400) der Schichtenanordnung kein Klebstoff vorliegt: Einfüllen eines Klebstoffs in dieses Innenvolumen (400);
III) Verpressen der Schichtenanordnung in dem Montagesystem mittels einer Pressvorrichtung;
IV) Aushärten des Klebstoffes.

11. Verfahren gemäß Anspruch 10, wobei vor, während und/oder nach dem Einfüllen des Klebstoffes dieser mit einem Unterdruck beaufschlagt wird.

12. Verfahren gemäß Anspruch 10 oder 11, wobei nach dem Verpressen in Schritt III) das Montagesystem aus der Pressvorrichtung entnommen wird, bevor in Schritt IV) der Klebstoff aushärtet.

13. Verfahren gemäß einem der Ansprüche 10 bis 12, wobei Schritt III) derart erfolgt, dass nach dem Verpressen der Schichtenanordnung in dem Montagesystem wenigstens die erste und die zweite Schicht parallel zueinander angeordnet sind.

14. Verfahren gemäß einem der Ansprüche 10 bis 13, wobei der Klebstoff ein strahlenhärtender Klebstoff ist und das Aushärten in Schritt IV) durch Bestrahlen des Klebstoffes erfolgt.

15. Verfahren gemäß einem der Ansprüche 10 bis 14, wobei in Schritt III) die Schichtenanordnung aufrecht stehend verpresst wird.
